# EUROPEAN PATENT APPLICATION

(11) **EP 4 686 863 A1**
(43) Date of publication of application: **04.02.2026**
(21) Application number: 25193177.0
(22) Date of filing: 31.07.2025
(51) Int. Cl.: F16L 9/18, F16L 39/00, F16L 59/065, F16L 59/14, F16L 59/18, F16L 58/18

(54) **VACUUM-INSULATED PIPE ASSEMBLY**

(30) Priority: 31.07.2024 GB 202411281
(71) Applicant: Airbus Operations Limited, Bristol BS34 7PA (GB)
(72) Inventor: SAKOTA, Nebojsa, Bristol, BS34 7PA (GB)
(74) Representative: EIP

(57) **Abstract**

Disclosed is a vacuum-insulated pipe assembly comprising an outer pipe and an inner pipe within the outer pipe, the inner and outer pipes concentric along a common central axis, the outer pipe spaced from the inner pipe to define a space, the space evacuated to define a vacuum. The outer pipe comprises first and second outer pipe sections, the first outer pipe section comprises a first outer connector, and the second outer pipe section comprises a second outer connector, the first outer connector removably connected to the second outer connector at an outer connection interface. The inner pipe comprises first and second inner pipe sections, the first inner pipe section comprises a first inner connector, and the second inner pipe section comprises a second inner connector, the first inner connector removably connected to the second inner connector at an inner connection interface. The inner connection interface is axially offset from the outer connection interface along the common central axis. The space extends continuously between the outer pipe and the inner pipe, across a region including each of the first and second outer pipe sections and each of the first and second inner pipe sections.

## Description

### TECHNICAL FIELD

The present invention relates to vacuum-insulated pipe assemblies, hydrogen fuel systems, and aircraft.

### BACKGROUND

Hydrogen fuel systems for aircraft may comprise vacuum-insulated pipes for transporting cryogenic hydrogen fuel between components of the hydrogen fuel system. Vacuum-insulated pipes employ a vacuum in a space between inner and outer pipes to thermally insulate the cryogenic hydrogen fuel flowing through the inner pipe.

### SUMMARY

A first aspect of the present invention provides a vacuum-insulated pipe assembly comprising an outer pipe and an inner pipe within the outer pipe, the inner and outer pipes concentric along a common central axis, the outer pipe spaced from the inner pipe to define a space, the space evacuated to define a vacuum. The outer pipe comprises first and second outer pipe sections, the first outer pipe section comprises a first outer connector, and the second outer pipe section comprises a second outer connector, the first outer connector removably connected to the second outer connector at an outer connection interface. The inner pipe comprises first and second inner pipe sections, the first inner pipe section comprises a first inner connector, and the second inner pipe section comprises a second inner connector, the first inner connector removably connected to the second inner connector at an inner connection interface. The inner connection interface is axially offset from the outer connection interface along the common central axis. The space extends continuously between the outer pipe and the inner pipe, across a region including each of the first and second outer pipe sections and each of the first and second inner pipe sections.

By providing the inner connection interface axially offset from the outer connection interface, the inner connection interface lies within one of the first and second outer pipe sections. When the one of the first and second outer pipe sections is uncoupled and moved away from the other of the first and second outer pipe sections, the inner connection interface protrudes out of the other of the first and second outer pipe sections. This permits easier access to the inner interface than an arrangement with aligned inner and outer connection interfaces, where access to the inner interface may be hindered by one of the first and second outer pipe sections.

Optionally, the inner pipe is configured so that a fluid is flowable through the inner pipe, in use. Optionally, the inner pipe is configured so that a cryogenic liquid, such as cryogenic hydrogen fuel, is flowable through the inner pipe, in use. The thermal insulation properties provided by the vacuum may be particularly advantageous when the inner pipe is configured to carry a cryogenic liquid, in particular to inhibit heating of the cryogenic fluid passing through the inner pipe by heat from the atmosphere external to the outer pipe.

The vacuum in the space provides a thermally-insulating barrier between the inner pipe and the outer pipe. This may reduce a rate of heat transfer between the fluid flowing through the inner pipe and an external atmosphere external to the outer pipe, in use, compared to a space filled with a gas, such as atmospheric air.

By extending continuously across each of the first and second outer pipe sections and each of the first and second inner pipe sections, the evacuated space extends continuously across the first and second connection interfaces. This provides improved thermal insulation compared, for example, to an arrangement comprising a barrier extending between the first and second connection interfaces, the barrier separating and fluidically isolating the space on either side of the barrier. This is because such a barrier may conduct heat between the first and second connection interfaces.

Optionally, the inner connection interface is axially offset from the outer connection interface along the common central axis by an amount that is more than 20%, more than 30%, more than 40%, more than 50%, more than 60%, more than 80%, or more than 100% of an internal diameter of the first and/or second outer pipe section. Optionally, the inner connection interface is axially offset from the outer connection interface along the common central axis by an amount greater than a diameter of the first and/or second inner pipe section, or a diameter of the first and/or second outer pipe section. Increasing the axial offset may reduce a restriction to a flow of air through the space during evacuation of the space, whilst reducing the axial offset may provide a more compact arrangement.

Optionally, the inner connection interface is axially offset from the outer connection interface along the common central axis such that the first and second inner connectors each lie entirely within a same one of the first and second outer pipe sections. In this way, when the outer pipe section within which the first and second inner connectors are located is uncoupled and moved away from the other of the first and second outer pipe sections, each of the first and second inner connectors protrudes from the other of the first and second outer pipe sections. This facilitates access to each of the first and second inner connectors, such as to connect or disconnect the first and second inner connectors.

Optionally, each of the first and second inner connectors is distanced from the outer pipe. In this way, the vacuum provides a thermal barrier between the first and second inner connectors and the outer pipe. This may reduce a likelihood of heat transfer between the outer pipe and the first and/or second inner connectors. This is particularly advantageous compared to an arrangement where one or both of the first and second connectors is partly in contact with the outer pipe (whilst still permitting the space to extend across the first and second connectors). In such a case, heat may be conducted from the outer pipe, through the first and/or second connector, and to the fluid flowing through the inner pipe, in use.

Optionally, each of the first and second inner connectors is distanced from the outer pipe, such as from the outer pipe section within which each of the first and second connectors is located, by an amount that is more than 10%, more than 20%, more than 30%, more than 50%, or more than 75% of a diameter of the first and/or second inner pipe section, in a direction orthogonal to the common central axis. Optionally, each of the first and second inner connectors is distanced from the outer pipe, such as from the outer pipe section within which each of the first and second connectors is located, by an amount that is more than more than 20%, more than 30%, more than 40%, more than 50%, more than 60%, more than 80%, or more than 100% of a diameter of the first and/or second inner pipe section. The greater the distance between the first and second inner connectors and the one of the first and second outer pipe sections, the larger the evacuated space between each of the first and second inner connectors and the one of the first and second outer pipe sections, and the greater the thermal insulation properties provided by the vacuum. Moreover, a greater distance between the first and second inner connectors and the one of the first and second outer pipe sections may reduce a restriction to a flow of air through the space during evacuation of the space. A lesser distance between the first and second inner connectors may provide a vacuum-insulated pipe assembly with reduced weight and improved ease of installation.

Optionally, the first and second outer connectors are located so that, when the first and second outer connectors are uncoupled, the first outer connector defines a free end of the first outer pipe section and the second outer connector defines a free end of the second outer pipe section. Optionally, the first and second inner connectors are located so that, when the first and second inner connectors are uncoupled, the first inner connector defines a free end of the first inner pipe section and the second inner connector defines a free end of the second inner pipe section.

Optionally, the vacuum-insulated pipe assembly comprises a locator connected to the first inner pipe section and to at least one of the first and second outer connectors, to restrict a relative movement of the inner and outer pipe in an axial direction along the common central axis. The locator thereby maintains the axial offset between the inner and outer connection interfaces along the common central axis. For instance, by providing the locator, an operator may be able to manipulate the inner and/or outer pipes, such as to connect the inner and/or outer pipes to further vacuum-insulated pipe assemblies, or to other components of a fluid distribution system, without affecting the axial offset of the inner and outer connection interfaces along the common central axis. This may provide a reliable vacuum-insulated pipe assembly.

Optionally, the locator distances the inner pipe from the outer pipe to define the space. Optionally, the locator is connected to the first inner pipe section and to the at least one of the first and second outer connectors to restrict a relative movement of the inner and outer pipes in an orthogonal direction orthogonal to the common central axis.

Optionally, the locator comprises a disc connected between the inner pipe and the at least one of the first and second outer connectors, the disc comprising at least one aperture therethrough. This allows the space to extend across the disc through the at least one aperture. The disc may comprise a plurality of apertures. The at least one aperture, such as the plurality of apertures, may have a cross-sectional shape that extends at least partly around the common central axis. The at least one aperture, such as the plurality of apertures, may make up more than 25%, such as more than 50%, such as more than 75% of a cross-sectional area of the disc when viewed along the common central axis. Increasing a size of the at least one aperture may reduce a volume of the disc, thereby reducing an amount of heat that is conducted through the disc between the inner pipe and the at least one of the first and second outer connectors. Optionally, the disc is an annular disc coaxial with the common central axis.

Optionally, the locator comprises an outer rim clamped between the first and second outer connectors. Providing the outer rim that is clamped between the first and second outer connectors may provide a convenient way to manufacture the vacuum-insulated pipe assembly. For instance, the first outer connector may engage with the outer rim of the locator as the first inner pipe section is inserted into the first outer pipe section, thereby inhibiting further movement of the first inner pipe section into the first outer pipe section. This may maintain a configuration in which the first inner pipe section protrudes from the first outer pipe section, exposing the first inner connector to which the second inner connector of the second inner pipe section can be offered up and connected. The second outer connector may then be offered up and connected to the first outer pipe connector to clamp the outer rim between the first and second outer connectors.

The first outer connector may comprise a groove arranged to receive the outer rim of the locator, the groove inhibiting a motion of the locator in the axial direction along the common central axis and in the orthogonal direction orthogonal to the common central axis. This may further limit movement of the first inner pipe section within the first outer pipe section, such as when connecting the second inner pipe section to the first inner pipe section during manufacture, and/or when the vacuum-insulated pipe assembly is assembled.

Optionally, the locator comprises an inner rim extending around the first inner pipe section at a location away from the first inner connector. When provided, the inner rim is fixed to the first inner pipe section at a location away from the first inner connector of the first inner pipe section. This allows the first inner connector to protrude from the first outer pipe section when the locator is connected, such as via the outer rim, to the first and/or second outer connector.

By providing the locator as a disc comprising the inner rim and the outer rim, stresses on the locator may be more evenly distributed through the locator about the common central axis than, for example, a locator extending only partly about the common central axis.

Optionally, the first outer connector comprises a first outer flange, the second outer connector comprises a second outer flange, and the vacuum-insulated pipe assembly comprises an outer seal element clamped between the first and second outer flanges. The outer seal element inhibits gas from the external atmosphere passing along the outer connection interface (i.e., between the first and second outer connectors) and into the space. This helps to maintain the vacuum in the space, thereby maintaining the improved thermal insulation properties of the pipe assembly compared to a space comprising the gas from the external atmosphere. The outer seal element also inhibits a fluid present in the space, such as in the event of a leak of the fluid from the inner pipe into the space, passing between the first and second outer connectors and into the external atmosphere. This reduces a likelihood of the fluid interacting with gases in the external atmosphere, which may improve a safety of the system, particularly when the fluid is cryogenic hydrogen fuel and the external atmosphere comprises oxygen.

Optionally, the outer seal element comprises a metallic gasket. Optionally, at least one of the first and second outer flanges comprises a protrusion. Optionally, the protrusion is engaged with the outer metallic gasket such that the outer metallic gasket is plastically deformed in the region of the protrusion. During connection of the first and second outer flanges to each other, the metallic gasket is clamped between the first and second outer flanges. A force provided by the clamping effect causes the protrusion to engage the metallic gasket and cause plastic deformation of the metallic gasket in the region of the protrusion. Optionally, the protrusion protrudes away from the at least one of the first and second outer flanges to a knife-edge tip. The knife-edge tip of the protrusion may provide a more localised stress on the metallic gasket than a protrusion with a rounded tip. This may, in turn, improve an ease with which the metallic gasket is locally plastically deformed during connection of the first and second outer flanges to each other.

The plastically-deformed metallic gasket fills in machining marks and surface defects in the first and second outer flanges, providing a hermetic seal. Furthermore, the metallic gasket is work-hardened by the plastic deformation. This provides a strong and resilient metallic gasket that is resilient to movement of the first and/or second outer flanges, such as due to expansion or contraction of the first and/or second outer flanges in the event of a change in temperature of the first and/or second outer flanges. This may, in turn, provide a seal that is more resilient to changes in temperature than, for example, an elastomeric seal elastically deformed between the first and second outer flanges, which may experience greater expansion and/or contraction on exposure to changing temperatures than the metallic gasket, such as in the event of a leak of cryogenic fluid from the inner pipe. Thus, the plastically deformed metallic gasket may be more resilient and/or more reliable than an elastomeric seal, particularly when the inner pipe is configured to carry cryogenic fluid, such as cryogenic hydrogen fuel.

Optionally, the first and second outer flanges comprise co-axial bolt holes, and the vacuum-insulated pipe assembly comprises bolts that extend through the co-axial bolt holes to connect the first and second outer flanges to each other. The bolts urge the first and second outer flanges towards each other, and thereby compress the metallic gasket between the first and second outer flanges to maintain the hermetic seal.

Optionally, the first inner connector comprises a first inner flange, the second inner connector comprises a second inner flange, and the vacuum-insulated pipe assembly comprises an inner seal element clamped between the first and second inner flanges. The inner seal element inhibits fluid flowing through the inner pipe passing along the inner connection interface (i.e., between the first and second inner connectors) and into the space. This maintains the vacuum in the space, and reduces a likelihood of the fluid heating up in the space due to increased heat transfer with the external atmosphere across the outer pipe absent the vacuum-insulating barrier.

Optionally, the inner seal element comprises a metallic gasket. Optionally, at least one of the first and second inner flanges comprises a protrusion. Optionally, the protrusion penetrates the metallic gasket such that the metallic gasket is plastically deformed in the region of the protrusion. During connection of the first and second inner flanges to each other, the metallic gasket is clamped between the first and second inner flanges. A force provided by the clamping effect causes the protrusion to engage the metallic gasket and cause plastic deformation of the metallic gasket in the region of the protrusion.

The plastically-deformed metallic gasket fills in machining marks and surface defects in the first and second inner flanges, providing a hermetic seal. Furthermore, the metallic gasket is work-hardened by the plastic deformation. This provides a strong and resilient metallic gasket that is resilient to movement of the first and/or second inner flanges, such as due to expansion or contraction of the first and/or second inner flanges in the event of a change in temperature of the first and/or second inner flanges. This may, in turn, provide a seal that is more resilient to changes in temperature than, for example, an elastomeric seal elastically deformed between the first and second inner flanges, which may experience greater expansion and/or contraction on exposure to changing temperatures than the metallic gasket, such as in the event of a leak of cryogenic fluid from the inner pipe. Thus, the plastically deformed metallic gasket may be more resilient and/or more reliable than an elastomeric seal, particularly when the inner pipe is configured to carry cryogenic fluid, such as cryogenic hydrogen fuel.

Optionally, the first and second inner flanges comprise co-axial bolt holes, and the vacuum-insulated pipe assembly comprises bolts that extend through the co-axial bolt holes to connect the first and second inner flanges to each other. The bolts urge the first and second inner flanges towards each other, and thereby compress the metallic gasket between the first and second inner flanges to maintain the hermetic seal.

Optionally, the first and second outer connectors comprise respective reciprocal first and second outer threaded portions. Providing the first and second outer threaded portions may improve an ease of manufacture of the vacuum-insulated pipe assembly, for instance compared to an assembly where the first and second outer connections comprise first and second flanges that are bolted together. Threading the reciprocal first and second outer threaded portions together may be quicker and/or easier than inserting and tightening bolts around such flanges. Moreover, with such a threaded connection, a clamping force provided by the first and second outer flanges may be more evenly distributed around the common central axis than when the first and second outer flanges are connected using bolts, thereby improving a sealing effect of the outer sealing element. Optionally, the vacuum-insulated pipe assembly comprises a sealing grease and/or a seal tape between the first and second outer threaded portions. The sealing grease and/or seal tape may have physical properties that allow the sealing grease and/or seal tape to provide a sealing effect under cryogenic conditions. The sealing grease and/or seal paste may reduce a likelihood of penetration of fluid, such as hydrogen, between the first and second outer threads.

Optionally, the first and second inner connectors comprise respective reciprocal first and second inner threaded portions. Providing the first and second inner threaded portions may improve an ease of manufacture of the vacuum-insulated pipe assembly, for instance compared to an assembly where the first and second inner connections comprise first and second flanges that are bolted together. Threading the reciprocal first and second inner threaded portions together may be quicker and/or easier than inserting and tightening bolts around such flanges. Moreover, with such a threaded connection, a clamping force provided by the first and second inner flanges may be more evenly distributed around the common central axis than when the first and second inner flanges are connected using bolts, thereby improving a sealing effect of the inner sealing element. Optionally, the vacuum-insulated pipe assembly comprises a sealing grease and/or a seal tape between the first and second inner threaded portions. The sealing grease and/or seal tape may have physical properties that allow the sealing grease and/or seal tape to provide a sealing effect under cryogenic conditions. The sealing grease and/or seal tape may reduce a likelihood of penetration of fluid, such as hydrogen, between the first and second inner threads.

Optionally, the inner connection interface is located within one of the first and second outer pipe sections, and the one of the first and second outer pipe sections comprises a sleeve portion and a support portion, the sleeve portion slidable in an axial direction along the common central axis relative to the support portion and away from the other of the first and second outer pipe sections to selectively provide access to the first and second inner connectors, the sleeve portion comprising the respective one of the first and second outer connectors.

The sleeve portion may be moved in the axial direction to provide access to the first and second inner connectors, whilst the support section remains stationary. In this way, the sleeve portion may permit access to the first and second inner portions without moving the entire one of the first and second pipe sections. This may provide a vacuum-insulated pipe assembly that is easier to maintain than a pipe assembly that is absent such a sleeve and which requires removal of entire sections of pipe to reach an inner connection interface.

A second aspect of the present invention provides a hydrogen fuel system comprising the vacuum-insulated pipe assembly of the first aspect of the present invention, the inner pipe forming a flow path for flow of hydrogen fuel in the hydrogen fuel system. Optionally, the hydrogen fuel system comprises a hydrogen fuel tank and a fuel line connected between the fuel tank and an engine, the fuel line comprising the vacuum-insulated pipe assembly. Optionally, the hydrogen fuel system is an aircraft hydrogen fuel system, and the engine is an aircraft engine. Optionally, the engine comprises a combustion engine and/or a fuel cell.

It will be appreciated that the hydrogen fuel system may comprise and/or benefit from any of the optional features and/or advantages provided for the vacuum-insulated pipe assembly of the first aspect of the present invention.

A third aspect of the present invention provides an aircraft comprising the vacuum-insulated pipe assembly of the first aspect of the present invention, or the hydrogen fuel system of the second aspect of the present invention.

### BRIEF DESCRIPTION OF THE DRAWINGS

Embodiments of the invention will now be described, by way of example only, with reference to the accompanying drawings, in which:
Figure 1 shows a schematic view of an example aircraft;
Figure 2 shows a schematic view of an example hydrogen fuel system;
Figure 3 shows a schematic view of an example vacuum-insulated pipe assembly;
Figures 3A and 3B show schematic zoomed-in views of respective parts of the vacuum-insulated pipe assembly of Figure 3;
Figure 4A shows a schematic view of a connector of the vacuum-insulated pipe assembly of Figure 3, when viewed along a common central axis;
Figure 4B shows a schematic view of an example metallic gasket for use with the connector of Figure 4B;
Figure 5 shows a schematic view of an example locator of the vacuum-insulated pipe assembly;
Figure 6 shows an alternative vacuum-insulated pipe assembly with a sliding sleeve; and
Figure 7 shows an inner pipe of a further alternative vacuum insulated pipe assembly.

### DETAILED DESCRIPTION

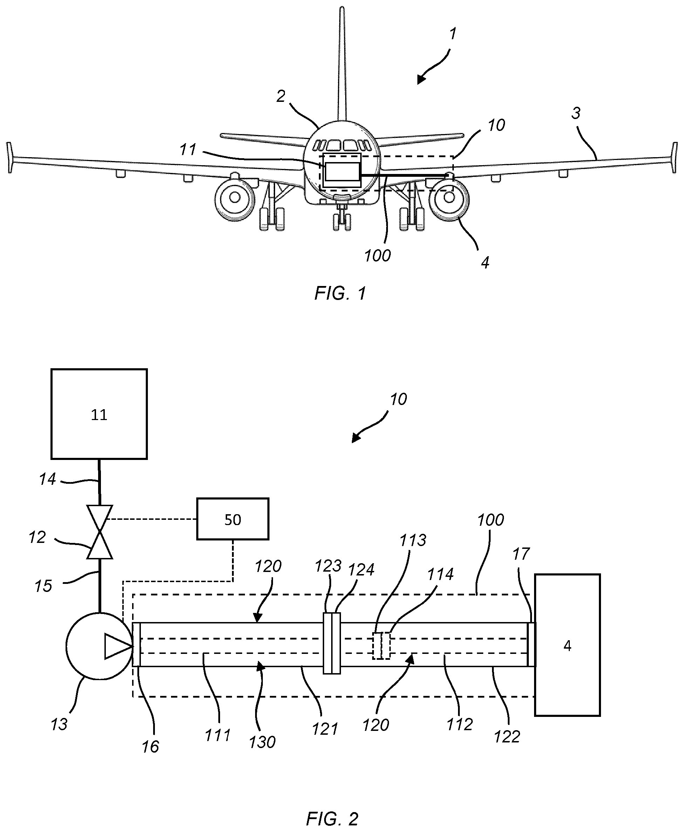

Figure 1 shows an example aircraft 1 comprising a fuselage 2, a wing 3 and an engine 4 mounted on the wing 3. The aircraft 1 comprises a hydrogen fuel system 10 comprising a hydrogen fuel tank 11 storing cryogenic hydrogen fuel. The hydrogen fuel system 10 comprises a vacuum-insulated pipe assembly 100 fluidically connected between the fuel tank 10 and the engine 4 (here shown as a single line, for ease of comprehension). The vacuum-insulated pipe assembly 100 is configured to provide hydrogen fuel to the engine 4. The fuel tank is located in the fuselage 2, and the vacuum-insulated pipe assembly 100 extends from the fuselage 2 along the wing 3 of the aircraft 1. The engine 4 comprises a combustion engine, but in other examples, the engine 4 may comprise a hydrogen fuel cell, which may generate electricity for powering a propulsor of the aircraft 1.

The hydrogen fuel system 10 is shown in more detail in Figure 2. The hydrogen fuel system 10 comprises the hydrogen fuel tank 11 storing the cryogenic hydrogen fuel for the engine 4. The hydrogen fuel system 10 also comprises a valve 12, a pump 13, a first vacuum-insulated pipe 14 fluidically connecting the valve 12 to the fuel tank 10, and a second vacuum-insulated pipe 15 fluidically connecting the pump 13 to the valve 14. The first and second vacuum-insulated pipes 14, 15 are shown as single lines for ease of comprehension.

The hydrogen fuel system 10 also comprises a controller 50 configured to operate the pump 13 and the valve 12 to selectively cause hydrogen fuel to flow through from the hydrogen fuel tank 10 to the engine 4 via the vacuum-insulated pipe assembly 100. It will be appreciated that the arrangement shown in Figure 2 is exemplary only, and that in other examples the hydrogen fuel system 10 may comprise any other suitable arrangement of pumps, valves, vacuum-insulated pipe assemblies and/or other components for distributing fuel in the hydrogen fuel system 10.

The vacuum-insulated pipe assembly 100 is fluidically connected between the pump 13 and the engine 4. The vacuum-insulated pipe assembly 100 comprises an outer pipe 120 and an inner pipe 110 within the outer pipe 120, the inner pipe 110 spaced from the outer pipe 110 to define a space 130. The space 130 is evacuated to define a vacuum. The outer pipe 120 comprises first and second outer pipe sections 121, 122. The first outer pipe section 121 comprises a first outer tubular wall 161, and a first outer flange 123 connected to the first outer tubular wall 161. The second outer pipe section 122 comprises a second outer tubular wall 162 and a second outer flange 124 connected to the second outer tubular wall 162. The first outer flange 123 is connected to the second outer flange 124 to fluidically connect the first outer pipe section 121 to the second outer pipe section 122. The inner pipe 110 comprises first and second inner pipe sections 111, 112. The first inner pipe section 111 comprises a first inner tubular wall 151 and a first inner flange 113 connected to the first inner tubular wall 151. The second inner pipe section 112 comprises a second inner tubular wall 152 and a second outer flange 124 connected to the second outer tubular wall 152. The first inner flange 113 of the first inner pipe section 111 is connected to the second inner flange 114 of the second inner pipe section 112 to fluidically connect the first inner pipe section 111 to the second inner pipe section 112. The inner and outer pipes 110, 120 are connected to the pump 13 by a pump connector 16, and to the engine 4 by an engine connector 17. The pump connector 16 and engine connector 17 define closed ends of the space 130.

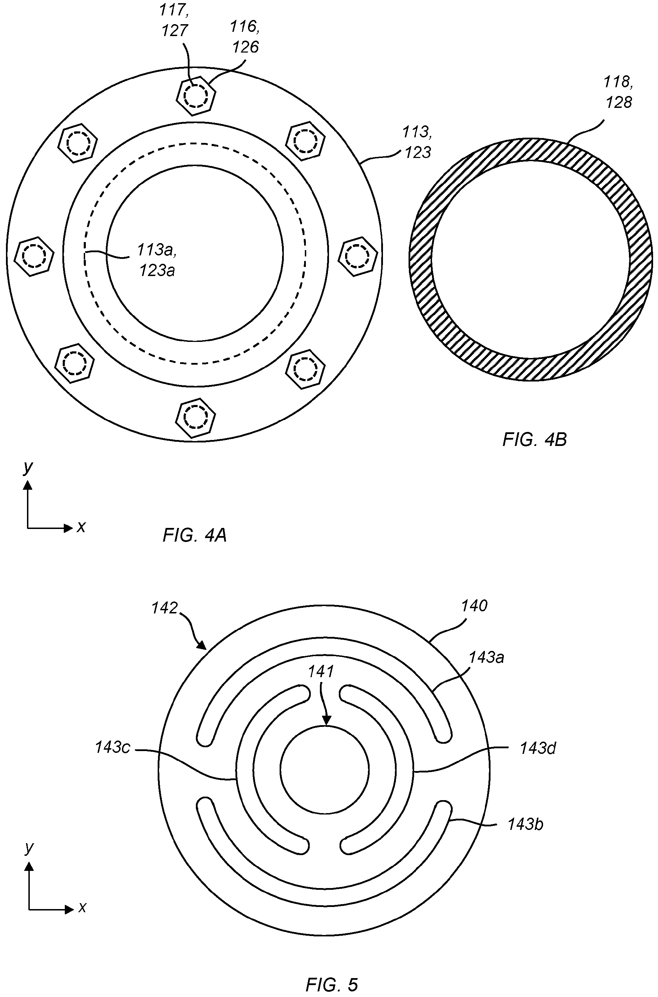

The first and second inner pipe sections 121, 122 and the first and second outer pipe sections 121, 122 are concentric about a common central axis 150. The first and second outer pipe flanges 123, 124 are releasably connected at an outer connection interface 125 by outer bolts 126 connected through respective outer bolt holes 127 equally spaced around each of the first and second outer flanges 123, 124. The first and second inner pipe sections 111, 112 are releasably connected at an inner connection interface 115 by inner bolts 116 connected through respective inner bolt holes 117 equally spaced around each of the first and second inner flanges 113, 114. This is best shown in Figure 4A, which shows the first outer flange 123 when viewed along the common central axis 150. For simplicity, Figure 4A shows reference numerals for corresponding components on the first inner flange 113, and only one of the outer bolts 126 and outer bolt holes 127 has been labelled.

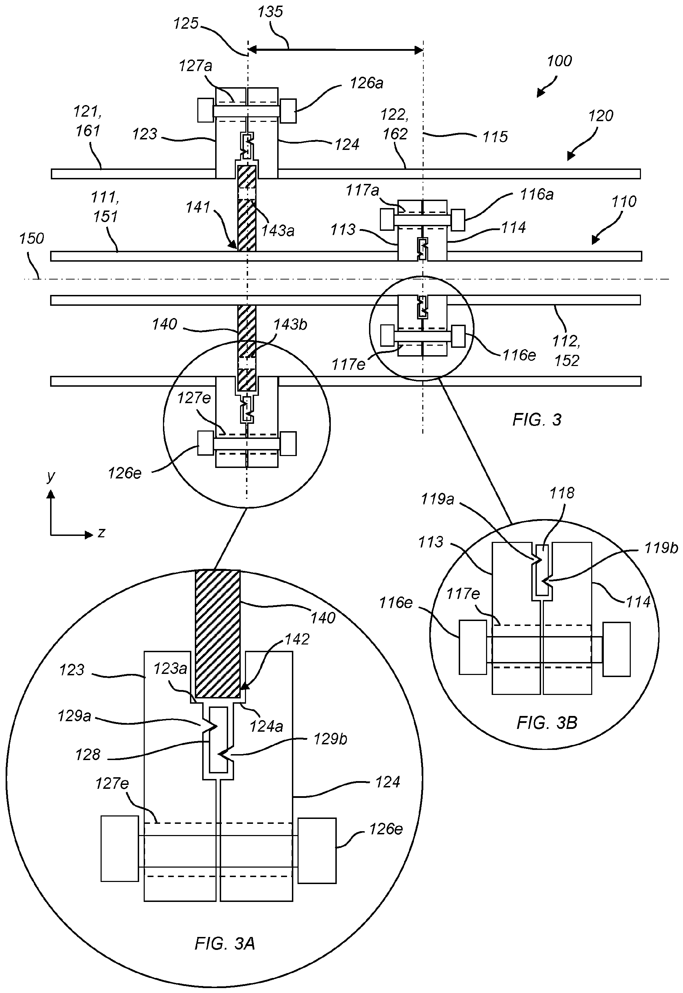

The vacuum-insulated pipe assembly 100 comprises an outer metallic gasket 128, as best shown in Figures 3A and 4B, which is annular and concentric with the common central axis 150. The outer metallic gasket 128 is clamped between the first and second outer flanges 123, 124. The first and second outer flanges 123, 124 comprise respective first and second outer protrusions 129a, 129b which extend around the common central axis 150 and are engaged with the outer metallic gasket 128. The outer metallic gasket 128 is plastically deformed in the region of the first and second outer protrusions 129a, 129b due to the clamping force between the first and second outer flanges. In this way, the outer metallic gasket 128 is work hardened by the plastic deformation, providing a hermetic seal at the outer connection interface 125 that is resilient to movement of the first and/or second outer flanges 123, 124. The vacuum-insulated pipe assembly 100 also comprises an inner metallic gasket 118, which is annular and concentric with the common central axis 150. As best shown in Figure 3B, the inner metallic gasket 118 is clamped between the first and second inner flanges 113, 114. The first and second inner flanges 113, 114 comprise respective first and second inner protrusions 119a, 119b which extend around the common central axis 150 and are engaged with the inner metallic gasket 118. As with the outer metallic gasket 128, the inner metallic gasket 118 is plastically deformed in the region of the first and second inner protrusions 129a, 129b, providing a work-hardened inner metallic gasket 118 that provides a hermetic seal at the inner connection interface 115.

The vacuum-insulated pipe assembly 100 also comprises a locator 140, which is distinguished in Figures 3 and 3A with hatched shading. The locator 140 is in the shape of an annular disc extending around the first inner pipe section 111 and concentric with the common central axis 150. The locator 140 comprises an inner rim 141 connected to the first inner pipe section 121 and an outer rim 142 that is clamped between the first and second outer flanges 123, 124. Clamping the outer rim 142 between the first and second outer flanges 123, 124 restricts a movement of the locator 140, and thus the outer pipe 120, in an axial direction along the common central axis. The first and second outer flanges 123, 124 also comprise respective first and second grooves 123a, 124a which engage with the outer rim 142 to inhibit a movement of the locator 140, and thus the inner pipe 110, in an orthogonal direction orthogonal to the common central axis 150. In this way, the locator 140 fixes a location of the inner pipe 110 relative to the outer pipe 120.

The locator 140 is fixed to the first inner pipe section 121, away from the first inner flange 113, so that the first and second connection interfaces 115, 125 are spaced apart in the axial direction along the common central axis 150. The first and second connection interfaces 115, 125 are axially offset by an axial offset distance 135, which here is 40 mm. This is approximately half of a diameter of the first and second outer pipes. In other examples, the axial offset distance 135 may be any other suitable value, such as up to 30mm, up to 65 mm, up to 70mm, or more than 70 mm. Increasing the axial offset 135 may provide more space between the first and second inner flanges 113, 114 and the locator 140 and the first and second outer flanges 123, 124, which may permit a freer flow of air through the space 130 during evacuation of the space 130 to provide the vacuum. The size of the axial offset 135 may, however, be limited by relative sizes of components of the vacuum-insulated pipe assembly 100, such as relative sizes of the first and second inner and outer flanges 113, 114, 123, 124, and/or the inner and outer pipes 110, 120.

By providing the axial offset, the first and second inner flanges 113, 114 and the first connection interface 115 are each located within the second outer pipe section 122. In this way, when the second outer flange 114 is disconnected from the first outer flange 123 and the second outer pipe section 122 is moved away, in the axial direction, from the first outer pipe section 121, the second inner pipe section 112 and first inner flange 113 protrude from the first outer pipe section 121. This may reduce a likelihood of the first outer pipe section 121 hindering access to the first connection interface 115, such as to facilitate connection and/or disconnection of the first and second inner flanges 113, 114.

Figure 5 shows the locator 140 when viewed along the common central axis 150, from which it can be seen that the locator 140 comprises four apertures 143a, 143b, 143c, 143d extending through the locator 140. The apertures 143a, 143b, 143c, 143d are elongate and extend partly around the common central axis 150. It will be appreciated, however, that in other examples the apertures 143a, 143b, 143c, 143d may be any other suitable shape, and may be provided in any suitable number. The apertures 143a, 143b, 143c, 143d allow the space 130 to extend through the locator 140 so that the space 130 is continuous and extends across the first and second pipe sections 110, 120. In this way, the thermal insulation properties provided by the vacuum in the space 130 apply across the inner and outer pipe sections 110, 120, including across the first and second outer flanges 123, 124 and the first and second inner flanges 113, 114.

It will be appreciated that the inner metallic gasket 118 hinders a flow of cryogenic hydrogen from the inner pipe 110 to the space 130, in use. This prevents heating and expansion of the cryogenic liquid hydrogen in the space 130 and maintains the vacuum in the space 130. The outer metallic gasket 128 hinders a flow of cryogenic hydrogen fuel that has leaked into the space 130 from the outer pipe 120 to an external atmosphere external to the outer pipe 120. This is particularly advantageous where the external atmosphere comprises oxygen, which is highly reactive with hydrogen. The outer metallic gasket 128 also hinders a flow of fluid from the external atmosphere into the space 130, thereby maintaining the vacuum in the space 130 and the thermal insulation properties the vacuum provides. There is no direct physical connection between the inner connection interface 115 and the outer connection interface 125. As such, each of inner and outer metallic gaskets 118, 128 provides independent sealing and redundancy in the case of a loss of integrity of the other of the inner and outer metallic gaskets 118, 128.

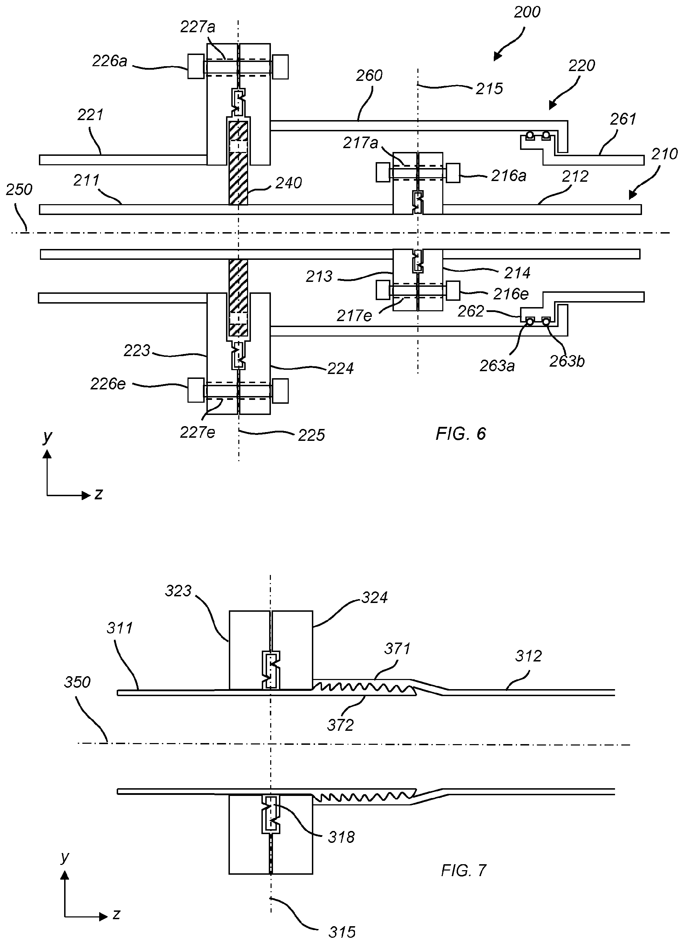

Figure 6 shows an example alternative vacuum-insulated pipe assembly 200. The features of the alternative vacuum-insulated pipe assembly 200 of Figure 6 which are the same as corresponding features of the vacuum-insulated pipe assembly 100 of Figures 2 to 5 are given like reference numerals, incremented by 100.

The alternative vacuum-insulated pipe assembly 200 of Figure 6 differs from the vacuum-insulated pipe assembly 100 of Figures 2 to 5 in that the outer pipe 220 comprises a sleeve portion 260 and a support portion 261. The support portion comprises a shoulder 262 which supports the sleeve portion 260, and along which the sleeve portion 260 is slidable in the axial direction along the common central axis 150. The sleeve portion 260 is slidable in the axial direction to selectively provide access to the first and second inner flanges 113, 114. The sleeve portion comprises the second outer flange 124, which is releasably connected to the first outer flange 123.

The support portion 261 comprises two polymeric O-rings 263a, 263b, located between the shoulder 262 and the sleeve portion 260, the O-rings 263a, 263b sealing a sliding interface between the shoulder 262 and the sleeve portion 260. This allows the space 130 to be evacuated to provide the vacuum when the second outer connector 224 is connected to the first outer connector 223.

Figure 6 shows an alternative inner pipe 310. Features corresponding to those of the vacuum-insulated pipe assembly of Figures 2 to 5 are given like reference numerals, incremented by 200.

The first and second inner pipe sections 311, 312 of the alternative inner pipe 310 comprise reciprocal threaded portions 371, 372 connected together to clamp the inner metallic gasket 318 between the first and second inner flanges 323, 234 of the alternative inner pipe 310. It will be appreciated that the clamping of the inner metallic gasket 318 of the alternative inner pipe provides the same sealing function as provided for the vacuum insulated pipe assembly 100 and the alternative vacuum insulated pipe assembly 200 discussed above. It will also be appreciated that the outer pipe 120, 220 of the vacuum-insulated pipe assembly 100 and/or the alternative vacuum-insulated pipe assembly 200 may comprise similar threaded portions for connecting the first outer connector 123, 223 to the second outer connector 124, 224. In some such examples, the locator 140, 240 may be connected to only one of the first and second outer connectors 123, 223, 124, 224, or may not be provided.

It will be appreciated that various modifications may be made to the examples described herein within the scope of the invention as defined by the appended claims. For instance, whilst the vacuum-insulated pipe assembly 100 has been described in relation to a hydrogen fuel system 10 for an aircraft 1, the hydrogen fuel system may be applied in any other suitable transport, or may be any other suitable cryogenic fluid handling system. Moreover, the hydrogen fuel tank 10, vacuum-insulated pipe assembly 100, and/or the engine 4 may be located in any other suitable location on the aircraft 1.

It is to be noted that the term "or" as used herein is to be interpreted to mean "and/or", unless expressly stated otherwise.

## Claims

1. A vacuum-insulated pipe assembly comprising an outer pipe and an inner pipe within the outer pipe, the inner and outer pipes concentric along a common central axis, the outer pipe spaced from the inner pipe to define a space, the space evacuated to define a vacuum, wherein:
the outer pipe comprises first and second outer pipe sections, the first outer pipe section comprises a first outer connector, and the second outer pipe section comprises a second outer connector, the first outer connector removably connected to the second outer connector at an outer connection interface;
the inner pipe comprises first and second inner pipe sections, the first inner pipe section comprises a first inner connector, and the second inner pipe section comprises a second inner connector, the first inner connector removably connected to the second inner connector at an inner connection interface;
the inner connection interface is axially offset from the outer connection interface along the common central axis; and
the space extends continuously between the outer pipe and the inner pipe, across a region including each of the first and second outer pipe sections and each of the first and second inner pipe sections.

2. The vacuum-insulated pipe of claim 1, wherein the inner connection interface is axially offset from the outer connection interface along the common central axis such that the first and second inner connectors each lie entirely within the same one of the first and second outer pipe sections.

3. The vacuum-insulated pipe of claim 1 or claim 2, wherein each of the first and second inner connectors is distanced from the outer pipe.

4. The vacuum-insulated pipe assembly of any one of claims 1 to 3, comprising a locator connected to the first inner pipe section and to at least one of the first and second outer connectors, to restrict a relative movement of the inner and outer pipe in an axial direction along the common central axis.

5. The vacuum-insulated pipe assembly of claim 4, wherein the locator comprises a disc connected between the inner pipe and the at least one of the first and second outer connectors, the disc comprising at least one aperture therethrough.

6. The vacuum-insulated pipe assembly of claim 4 or claim 5, wherein the locator comprises an outer rim clamped between the first and second outer connectors.

7. The vacuum-insulated pipe assembly of any one of claims 1 to 6, wherein the first outer connector comprises a first outer flange, the second outer connector comprises a second outer flange, and the vacuum-insulated pipe assembly comprises an outer seal element clamped between the first and second outer flanges.

8. The vacuum-insulated pipe assembly of claim 7, wherein:
the outer seal element comprises a metallic gasket,
at least one of the first and second outer flanges comprises a protrusion, and
the protrusion is engaged with the outer metallic gasket such that the outer metallic gasket is plastically deformed in the region of the protrusion.

9. The vacuum-insulated pipe assembly of any one of claims 1 to 8, wherein the first inner connector comprises a first inner flange, the second inner connector comprises a second inner flange, and the vacuum-insulated pipe assembly comprises an inner seal element clamped between the first and second inner flanges.

10. The vacuum-insulated pipe assembly of claim 9, wherein:
the inner seal element comprises a metallic gasket,
at least one of the first and second inner flanges comprises a protrusion, and
the protrusion penetrates the metallic gasket such that the metallic gasket is plastically deformed in the region of the protrusion.

11. The vacuum-insulated pipe assembly of any one of claims 1 to 10, wherein the first and second outer connectors comprise respective reciprocal first and second outer threaded portions.

12. The vacuum-insulated pipe assembly of any one of claims 1 to 11, wherein the first and second inner connectors comprise respective reciprocal first and second inner threaded portions.

13. The vacuum-insulated pipe assembly of any one of claims 1 to 12, wherein the inner connection interface is located within one of the first and second outer pipe sections, and the one of the first and second outer pipe sections comprises a sleeve portion and a support portion, the sleeve portion slidable in an axial direction along the common central axis relative to the support portion and away from the other of the first and second outer pipe sections to selectively provide access to the first and second inner connectors, the sleeve portion comprising the respective one of the first and second outer connectors.

14. A hydrogen fuel system comprising the vacuum-insulated pipe assembly of any one of claims 1 to 13, the inner pipe forming a flow path for flow of hydrogen fuel in the hydrogen fuel system.

15. An aircraft comprising the vacuum-insulated pipe assembly of any one of claims 1 to 13, or the hydrogen fuel system of claim 14.
